# EUROPEAN PATENT APPLICATION

(11) **EP 2 371 472 A2**
(43) Date of publication of application: **05.10.2011**
(21) Application number: 11158506.3
(22) Date of filing: 16.03.2011
(51) Int. Cl.: B22F 9/24, B22F 1/00

(54) **Low temperature sinterable metal nanoparticle composition and electronic article formed using the composition**

(30) Priority: 26.03.2010 JP 2010073481
(71) Applicant: Dowa Electronics Materials Co., Ltd., Chiyoda-ku Tokyo 101-0021 (JP)
(72) Inventor: Jablonski, Gregory A., Pennyslvania, PA 19067 (US); Mastropietro, Michael A, Bridgewater, NJ 08807 (US); Sato,, Kimitaka, Chiyoda-ku Tokyo 101-0021 (JP); Kurita Satoru, Chiyoda-ku Tokyo 101-0021 (JP); Fujita, Hidefumi, Chiyoda-ku Tokyo 101-0021 (JP)
(74) Representative: Haley, Stephen

(57) **Abstract**

[OBJECT] A composition of a metal nanoparticle is provided in which reproducibility in a method of producing a metal film with excellent low-temperature sinterable properties is improved. An article using the metal nanoparticle composition is also provided.

[SOLVING MEANS] A composition of a metal nanoparticle that has a secondary aggregation diameter (median diameter) of 2.0 µm or less as determined by disk centrifugal-type particle size measurement is used.

## Description

### [TECHNICAL FIELD]

The present invention relates to a metal nanoparticle composition that exhibits good adhesion to a substrate and can form a metal film or a conductive circuit at low temperatures in a short time.

### [BACKGROUND ART]

A method for etching a metal foil made of aluminum, copper or the like is commonly applied as a main wiring method on printed circuit boards widely used in electric appliances. With this conventional method, however, material loss in removed portion by etching is more than a little, which is not favorable from the viewpoint of the effective utilization of the material.

Further, as this method of etching produces waste liquid or the like, load on the environment is by no means small. In recent years, from the viewpoint of natural resources saving and environmental measures, wiring forming by other methods has been positively studied.

Among the new wiring forming technology under study, "printed electronics" that utilizes an existing printing technology to form wiring patterns and conductive films has particularly received considerable attention since it is expected that a large number of the desired products are easily obtained.

"Printed electronics" is applicable to a wide variety of areas. Some of the promising applications thereof include printed CPUs, printed lighting devices, printed RFID tags all-printed displays, sensors, printed wiring boards, organic solar cells, electronic books, nano-imprinted LEDs, liquid crystal-PDP panels, printed memories, and RFID.

The major determinant of success or failure of "printed electronics" relies upon a metal component that provides the electrical conductivity. Therefore, to achieve further progress in the printed electronics technology, various studies are being conducted on conductive metal particles, in particular, on metal nanoparticles having a particle size on the order of nanometers from the viewpoint of the field of fine wiring and low-temperature sinterable properties that is expected to be achieved by the printing method (see, for example, Patent Documents 1 and 2).

It is well known that when the size of a metal particle is on the order of nanometers, its properties are greatly different from its bulk properties. Since the activity of particles having a size of the order of nanometers is very high, the particles themselves are unstable. Therefore, nanoparticles are generally provided in a form that their surfaces are coated with a coating layer formed mainly of an organic material such as a surfactant. Accordingly, metal nanoparticles are generally provided in the form of a composition in which the metal nanoparticles coated with a surfactant are dispersed in an organic solvent.

As described above, the surfaces of metal nanoparticles having a particle size on the order of nanometers are coated with an organic material such as a surfactant to avoid sintering and aggregation of the particles. The use of a long chain surfactant can avoid sintering and aggregation of the particles, so the independence of the particles in the dispersion and its storage stability can be ensured. However, if the surfactant coating the particles has a high molecular weight, high-temperature treatment must be performed to remove or decompose the surfactant on the particle surface before forming a metal film even with the size of the metal on the order of nanometers. This makes it difficult to use such metal nanoparticles for a heat sensitive wiring board. Therefore, the range of the possible application of the metal nanoparticles may be narrowed.

Generally, the heating in a conventionally reported metal film forming method applying metal nanoparticle technology must be performed over a relatively long period of time (about 30 minutes to about 1 hour). This generally causes problems on productivity and energy saving.

Metal nanoparticles are generally dispersed in an organic solvent such as decane or terpineol. It is well known that an organic solvent can cause environmental pollution unless care is taken in its disposal. When an organic solvent is heated or left to stand in an open system, its evaporated organic component diffuses into the surroundings. Therefore, when a large amount of the organic solvent is used, a local ventilation system, for example, must be provided. Also the evaporated organic component may adversely affect human health. If possible, it is preferable in terms of environment and workability that a dispersion medium not containing an organic solvent as a main component be used.

In view of the above, the present inventors have devised a technology of low-temperature sinterable metal nanoparticles that can form a metal film in a short time and have disclosed the details of the technology in a previous application (see Patent Document 3).

### [PRIOR ART DOCUMENTS]

[Patent Document 1] Japanese Patent Application Laid-Open No. 2005-200604.
[Patent Document 2] Japanese Patent Application Laid-Open No. 2005-310703.
[Patent Document 3] WO2008/04831 pamphlet.

### [SUMMARY OF THE INVENTION]

### [PROBLEMS TO BE SOLVED BY THE INVENTION]

When forming an Ag nanoparticle composition as disclosed in Patent Document 3 by the inventors of the present invention, some Ag nanoparticle compositions cause defectives for some reason. Examples of such compositions that cause defectives include: a composition in which the dispersion properties of the Ag nanoparticles are significantly impaired and sediment of the nanoparticles occurs in a short time; a composition which, after applied and dried, forms a conductive film exhibiting a high resistance; and a composition in which irregularities is formed on the coating surface that result in deterioration of the surface roughness.

Unless these problems are resolved, the yield of the products is very bad even when sintering can be completed at low temperatures in a short period of time, and the advantages of these particles are significantly impaired.

### [MEANS FOR SOLVING THE PROBLEMS]

The foregoing problems can be solved by the following aspects. In a first aspect, a composition of metal nanoparticles is used in which a secondary aggregation diameter (median diameter) is 2.0 µm or less as determined by disk centrifugal-type particle size distribution measurement.

In a second aspect, a composition of metal nanoparticles is used which satisfies the above constitutional requirement and in which a primary particle diameter is 30 nm or less as measured using a transmission electron microscope.

In a third aspect according to any of the above aspects, a surfactant that forms surfaces of the metal nanoparticles has a carbon number of 3 to 8.

In a fourth aspect according to any of the above aspects, silver is selected as a metal species of the metal nanoparticles.

In a fifth aspect according to any of the above aspects, the metal nanoparticles are dispersed in a composition medium composed mainly of water (the phrase "composed mainly of water" means that at least half of the total mass of the constituents, including the metal nanoparticles, is water (in weight ratio)).

In a sixth aspect, the constitutional requirement for the composition is that electrical conductivity of the composition is not less than 1S/m.

In a seventh aspect, the constitutional requirement for the composition is that nitric acid component in the composition is not less than 0.2%.

In eighth to tenth aspects, the constitutional requirement for the composition is that the composition contains at least one of an aqueous resin dispersion, a water soluble resin, and a resin having an amine as a constitutional unit.

In an eleventh aspect, in a step for synthesizing the metal nanoparticles according to any of the above aspects, synthesis is made while stirring under a condition satisfying that nd ^{(2/3)} is not more than 160 when the number of revolution of a stirrer and a diameter of a stirring blade are denoted as n(rpm) and d(m) respectively.

Other aspects provide a metal wiring pattern, a metal film, and an antenna for RFID that are formed using any of the above compositions. The characteristic conditions to obtain these articles are that the heating temperature can be 140°C or less and the heating time can be less than 90 seconds.

### [EFFECTS OF THE INVENTION]

A high quality finished metal film excellent in a low temperature sintering property can be obtained with good reproducibility by using metal nanoparticles and a composition thereof according to the present invention.

### [IN THE DRAWINGS]

Fig. 1 is a transmission electron microscope photograph of metal nanoparticles in Example 1 (300,000X, but original dimensions of an image portion in the photograph are: 17.0 cm (length), 24.1 cm (width)).

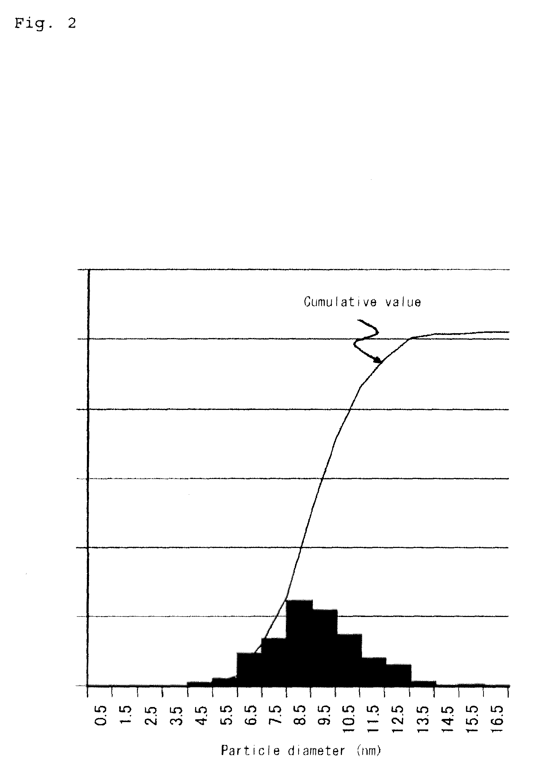

Fig. 2 shows the particle size distribution of the metal nanoparticles in Example 1.
Fig. 3 is a graph showing time for leaving still, and a distance from a solution level to sediment of particles precipitated while being left still (sedimentation amount, mm) in Examples 1 to 3 and Comparative Example 1.
Fig. 4 (a) is a photograph of the composition after being left still for 120 hours in Examples 1 to 3 and Comparative Example 1, and Fig. 4 (b) is a pattern diagram simply showing how to calculate sedimentation amount.
Fig. 5 is a photograph of the appearance of a sintered film obtained by applying a composition in Example 1.
Fig. 6 is a photograph of the appearance of a sintered film obtained by applying a composition in Comparative Example 3.

### [BEST MODE FOR CARRYING OUT THE INVENTION]

### < Metal nanoparticles >

The surfaces of metal nanoparticles used in the present invention are coated with a linear fatty acid having a carbon number of 3 to 8 or a derivative thereof. This linear fatty acid serves as a so-called protection agent having an effect of preventing sintering of particles to maintain an appropriate distance therebetween. When the carbon number of the liner chain is greater than 8, a high thermal energy is required for heat decomposition. This is not preferred for applications that require low-temperature sinterable properties. To ensure an adequate degree of stability of particles in a solution, the particles must be separated from each other by an adequate distance. Therefore, it is preferable to use a linear fatty acid having a carbon number of preferably 3 or more and more preferably 4 or more and less than 8.

The metal nanoparticles used in the present invention are produced by a wet method. No particular limitation is imposed on the type of metal, so long as the nanoparticles can be produced by the wet method. Examples of the usable metal include gold, silver, copper, palladium, platinum, and cobalt. Of these, gold, silver, copper, and platinum can be suitably used. An alloy of these metals may be used if the alloy can be formed in a solution at low temperatures.

When the ratio of the metal nanoparticles contained in the composition is too low, a coating film shrinks too drastically in drying and sintering steps after coating, and consequently breakage of the film occurs which makes production of the uniform and high quality film difficult. Also when the ratio is too high, the viscosity of the composition becomes too high, which makes printing and coating difficult. Therefore, the composition of the present invention contains the metal nanoparticles in an amount in the range of 5 to 70 percent by mass, preferably 10 to 70 percent by mass, and most preferably 20 to 70 percent by mass. The amount of the fatty acid used as the coating surrounding the nanoparticles is in the range of 0.5 to 70 percent by mass, preferably 1 to 30 percent by mass, and most preferably 2 to 25 percent by mass based on the total mass of the metal nanoparticles.

The diameter of the metal nanoparticles is 1 to 100 nm, preferably 1 to 50 nm, and more preferably 1 to 30 nm as measured by a transmission electron microscope (TEM). Particles having a diameter exceeding the above range are not preferred because the expected low-temperature sinterable properties of the metal nanoparticles may not be obtained.

The secondary aggregation diameter (median diameter) measured by disk centrifugal-type particle size measurement is 2.0 µm or less, preferably 1.7 µm or less, and most preferably 1.5 µm or less. The secondary aggregation diameter exceeding 2.0 µm is not preferred because, due to the drastic sediment of particles in the composition and the influence of the aggregated clusters, irregularities may be present on the coating film after a drawing process that uses a printing method.

A secondary aggregation body identified by disk centrifugal-type particle size measurement in the present invention is formed with primary metal particles aggregated one another with weak force. Accordingly, when the secondary aggregation body is dispersed under certain shearing force. With characteristics like this the composition in the present invention has both a low-temperature sintering property of nanoparticles and thixotropy suitable for the composition. Thus the composition owns the appropriate characteristics for printable electronics application.

The secondary aggregation body in the present invention readily crumbles under shearing force as above. Therefore, the secondary aggregation diameters shown above are just the result of the disk centrifugal-type particle size measurement and the same or equivalent result may not be obtained with other particle size distribution analyzers

### < Metal nanoparticle composition>

The medium of the composition in the present invention is composed mainly of water. The phrase "composed mainly of water" means that the ratio of the medium is 50 percent by mass or more based on the total mass of the composition except for the metal component. Such a composition may contain auxiliary solvents in a total amount of 50 percent by mass or less.

Examples of the usable auxiliary solvents include: polar solvents such as alcohols, polyols, glycol ethers, 1-methylpyrrolidinone, pyridine, and methyl ethyl ketone; and nonpolar solvents such as tetrahydrofuran, toluene, xylene, paraffins, and N,N-dimethylformamide. Any one of the above solvents or a combination of two or more thereof may be used. For example, when an alcohol is used as the auxiliary solvent, the addition of the alcohol can reduce the surface tension of the composition so that the wettability to a printing subject can be improved.

To improve the fluidity, a water soluble resin, particularly a water soluble polysaccharide may be added to the composition. Examples of the water soluble polysaccharide that can be added include water soluble hemicellulose, gum arabic, tragacanth gum, carrageenan, xanthan gum, guar gum, tara gum, gloiopeltis glue, agar, furcellaran, tamarind seed polysaccharide, karaya gum, abelmoschus manihot, pectin, sodium alginate, pullulan, jellan gum, locust bean gum, various starches, carboxymethyl cellulose (CMC), methyl cellulose (MC), ethyl cellulose (EC), hydroxymethyl cellulose (HMC), hydroxyethyl cellulose (HEC), hydroxypropyl cellulose (HPC), hydroxyethylmethyl cellulose (HEMC), hydroxyethylethyl cellulose (HEEC), hydroxypropylmethyl cellulose (HPMC), hydroxypropylethyl cellulose (HPEC), hydroxyethylhydoxypropyl cellulose (HEHPC), sulfoethyl cellulose, dihydroxypropyl cellulose (DHPC), alginic acid propylene glycol ester, and modified starches such as soluble starch. Of these, cellulose derivatives are preferably selected and used.

The added amount of the water soluble polysaccharide is less than 10 percent by mass, preferably less than 5 percent by mass, and more preferably less than 3 percent by mass based on the mass of the metal component. When the water soluble resin is added in an amount of 10 percent by mass or more, it inhibits interparticle sintering of silver nanoparticles. In addition, such a water soluble resin enters gaps between the particles and increases the resistance therein. This causes a reduction in conductivity, and therefore the resultant conductive coating is not preferred.

A resin containing an amine as a constitutional unit, for example, a resin or copolymer in which a part of its constitutional unit is neutralized with an amine may be added for the purpose of appropriately adjusting the viscosity or of immobilizing the metal film.

In such a case, the added amount of the copolymer is greater than 0 percent by mass and less than 5%, preferably 1 to 5 percent by mass, and more preferably 1 to 3 percent by mass based on the total mass of the composition.

Moreover, an aqueous resin dispersion may be added to enhance adhesion properties between the coating and the substrate. The aqueous resin dispersion is a stable suspension or dispersion of a polymer in water. Specifically, a so-called emulsion latex can be preferably used. Latexes are broadly classified into three groups, i.e., NR latexes which are natural products produced by the metabolism of plants, synthetic rubber latexes synthesized by an emulsion polymerization method, and artificial latexes produced by emulsifying and dispersing solid rubber in water. However, any of these latexes can be used so long as it is aqueous, i.e., can be dispersed in water.

Examples of the aqueous latex or aqueous emulsion include: an aqueous latex or aqueous emulsion of one compound selected from the group consisting of styrene, butadiene, acrylamide, acrylonitrile, chloroprene, 1,3-hexadiene, isoprene, isobutene, acrylic esters, methacrylic esters, vinyl acetate, vinyl propionate, ethylene, vinyl chloride, vinylidene chloride, and ethylvinyl ethers; and an aqueous latex or aqueous emulsion of two or more unsaturated copolymerizable monomers selected from the above compound group. The aqueous latex or aqueous emulsion may be any of modified latexes and modified emulsions prepared by emulsion polymerization of an unsaturated monomer containing one or two or more reactive groups selected from the group consisting of a carboxyl group, an N-methylol group, an N-alkoxymethyl group, a glycidyl group, a β-methylglycidyl group, a hydroxy group, an amino group, and an acid anhydride group.

The added amount of the aqueous latex or aqueous emulsion is 0.5 to 8 percent by mass, preferably 1 to 8 percent by mass, and more preferably 1 to 7 percent by mass based on the total mass. When the added amount is less than 0.5 percent by mass, sufficient adhesion properties are not obtained. When the added amount is greater than 8 percent by mass, the composition properties are significantly impaired (for example, aggregated clusters are formed in the dispersion). This is not preferred because the conductivity of a coating is adversely affected.

A nitric acid component in the composition accelerates decomposition of surfactant, dispersant, and other additive resins at heating steps such as drying and sintering steps after applying the composition onto the substrate. Therefore when the concentration of the nitric acid component is too low, the low-temperature sintering property is impaired, which makes it difficult to produce a film with good conductivity on a substrate having a low heat resistance such as a PET substrate.

When nitrate salt is used as the raw material of metal salt, the nitric acid component is supplied from the nitrate salt. When using other metal salts, nitric acid or other nitrate salt may be added to supply the nitric acid component after synthesizing the particles.

In the case of a water-based composition including conventional metal nanoparticles, the composition aggregates and settles out sensitively reacting to the concentration of the existing electrolyte component, and storage stability may be impaired. Accordingly the electrical conductivity of the composition has to be maintained as low as possible (eg. 0.01 s/m or below). On the contrary, with the dedicated study of the present inventors, unlike the water-based composition including conventional metal nanoparticles, it is found out that for unknown reasons the dispersibility of the particles can be maintained and, as a result, the storage stability can be maintained and quality coating film with excellent conductivity can be obtained in the present invention.

Thus, the concentration of nitrate ion in the obtained composition is preferably not less than 0.2 percent by mass and not more than 8.0 percent by mass, and more preferably not less than 0.5 percent by mass and not more than 6.0 percent by mass. Similarly, the electrical conductivity of the composition is preferably not less than 1.0 s/m, and more preferably not less than 2.0 s/m, and further preferably not less than 3.0 s/m. When the above conditions are not satisfied, the secondary aggregation diameter of the metal nanoparticle composition becomes large which causes heavy sedimentation of the composition. This is not preferred because irregularities are present in the coating itself, and the conductivity of the film after sintering is impaired due to the deterioration of the low-temperature sintering property.

### <Production of metal nanoparticles>

A description will be given of a method of producing the metal nanoparticles according to the present invention. The present invention is characterized in that a composition is produced without performing generally required steps such as filtration, and drying steps. With the method of producing a composition without performing filtration, and drying steps, a metal nanoparticle composition having excellent dispersion properties and low-temperature sinterable properties can be obtained. Moreover, by omitting the above steps, the manufacturing facility can be simplified.

### <Preparation of raw material solutions>

The metal nanoparticles according to the present invention are obtained by preparing three types of solutions in advance and successively mixing the prepared solutions. First, a description will be given of each of the solutions.

### (Solution A)

Ammonia water and a fatty acid are dissolved in ion-exchanged water.

### (Solution B)

A reducing agent that reduces metal ions is diluted with ion-exchanged water or dissolved in ion-exchanged water if it is solid at room temperature. It is sufficient that the reducing agent have an ability to reduce the metal ions in the aqueous solution. Any one or a combination of two or more of hydrazine, hydrazine hydrate, sodium borohydride, lithium borohydride, ascorbic acid, primary amines, secondary amines, tertiary amines, and aluminum lithium hydride may be appropriately selected as the reducing agent.

### (Solution C)

A water soluble metal salt of any of the above-described metal species is dissolved in ion-exchanged water.

When silver is used, silver nitrate or the like can be used as the metal salt. In addition, the metal salt may be selected from acetate, carboxylate, sulfate, chloride, hydrate, and the like. If the selected salt is not easily dissolved in water at room temperature, the solution may be heated, or a dissolving assistant may be added in the range which does not interfere with the reaction.

### < Reaction step >

A certain amount of ion-exchanged water is put in a reaction vessel and kept at prescribed temperature. The reaction is carried out by charging the solution A in the reaction vessel, then adding the solution B, the solution C to the mixture in order.

The solution C is prepared to have the metal concentration in the reaction vessel to be 0.3 to 0.9 mol/L, and preferably 0.4 to 0.7 mol/L. When the concentration is lower than the above values, an amount of metal nanoparticles obtained after the reaction is less and the productivity is impaired, which is not preferable. When the concentration is higher than the above values, the reaction is accelerated severely to be controlled, which is also unfavorable as the reaction becomes nonuniform.

The reaction temperature (the temperature of the reaction mixture) at this time is room temperature to 70°C, preferably 35 to 70°C, and more preferably 40 to 60°C.

It is called "scale-up" to obtain design criteria for realizing stirring effect in a large vessel in a real production process equivalent to the stirring effect in a state of a small model vessel. The main objective of stirring is mixing, which includes various purposes of use such as reaction, mass transfer, and acceleration of thermal motion as well as simple uniformity. Accordingly some guidelines for scaling up are suggested.

Among the guidelines suggested is the concept of the constant required power of stirring per unit volume. The concept is that regarding the number of rotation of a stirrer as n (rpm) and the stirring blade diameter as d (m), nd ^{(2/3)} is constant regardless of Re (Reynolds number) under turbulent flow. In other words, when scaling up to a reaction vessel with a similar figure, the number of rotation of the stirrer should be regulated so that the nd ^{(2/3)} is constant. This information is important for scaling up.

The present inventors have conducted research focusing on the relation between the number of the rotation in stirring and the scale of the reaction vessel. As a result, they have found out that in the present invention, the relation between the number of rotation n for synthesizing metal nanoparticles and the stirring blade diameter d is preferably not more than 160, more preferably not more than 150, and further preferably not more than 130.

When the above conditions are not satisfied, the secondary aggregation diameter of the metal nanoparticle composition becomes large which causes heavy sedimentation of the composition. This is not preferred because irregularities are present in the coating itself, and the conductivity of the film after sintering is impaired.

### <Separation step>

The supernatant and reaction product in the reaction mixture are separated from each other by natural sedimentation. It is preferable that the reaction mixture be left to stand for at least one half day. It is also preferable that the reaction mixture be left to stand until the supernatant occupies about the upper half of the solution volume during natural sedimentation. The obtained product is separated from the supernatant by decantation, whereby the aggregates of metal nanoparticles can be obtained. A centrifugal separator may be used for shortening time for separation.

### <Dispersion step>

The above-described water soluble resin, aqueous latex, and aqueous resin dispersion are added to the aggregates wherein the concentration of metal particles is increased to the desired concentration by the separation step. Thus, a metal nanoparticle dispersion containing the aggregates dispersed therein is obtained.

### <Evaluation of the average primary particle diameter>

### (Measurement of the average value of the primary particle diameters using a TEM image)

2 Parts by mass of the aggregated clusters of the metal nanoparticles was added to a mixed solution of 96 parts by mass of cyclohexane and 2 parts by mass of oleic acid, and the aggregated clusters were dispersed using ultrasound. The dispersion was added dropwise to a Cu microgrid provided with a support film and was then dried to produce a TEM sample. The produced microgrid was observed under a transmission electron microscope (JEM-100CX Mark-II type, product of JEOL Ltd.) at an acceleration voltage of 100 kV, and a photograph of the observed bright field image of the particles was taken at a magnification of 300,000 X.

Image analysis software ("A-zou kun (registered trademark)," product of Asahi Kasei Engineering Corporation) was used to compute the average primary particle diameter. In this image analysis software, individual particles are identified based on color contrast. Circular particle analysis was performed on the 300,000X TEM image under the conditions that "particle brightness" was set to "dark," a "noise removal filter" was set to "on," a "circular threshold value" was set to "20," and an "overlapping degree" was set to "50." At least 200 particles were measured for the primary particle size, and the number average diameter was determined. When aggregated particles or odd-shaped particles were found in the TEM image, the measurement was not performed.

### <Evaluation of the secondary aggregation diameter>

The secondary aggregation diameter of the metal nanoparticle composition is measured using a disk centrifugal type particle size distribution apparatus (DC-2400, product of CPS Instruments, Inc.). In the measurement, a solution having a high particle concentration is not suitable for the measurement. Therefore it is preferable to perform measurement after diluting the metal nanoparticle composition. The dilution should be made with a main component of the solvent of the metal nanoparticle composition so as to prevent the particles from being aggregated. In the metal nanoparticle composition in the present invention, the dilution was made by adding the supernatant obtained by natural sedimentation of the reacted particles. The measurement was performed using a solution prepared such that the particle concentration is adjusted to 0.2 percent by mass

The 50% cumulative particle diameter (median diameter) was computed from each obtained particle size histogram, and a comparison was made on the aggregated particle diameters in the compositions. In the present invention, since the particle size distribution is not strictly left-right symmetric, the value of the 50% cumulative particle diameter is different from the average particle diameter (mean diameter).

### <Evaluation of adhesion>

The evaluation of the adhesion between the film as a base and the metal film sintered after coating is made by a tape peeling test. At first, a piece of adhesive cellophane tape made by Nichiban Co., Ltd. (Model : CT405AP-24) is firmly attached onto the sintered metal film. Afterwards, the tape is peeled off in a direction perpendicular to the film at once. Then the adhesion is determined by observing the state of the metal film.

### [Examples]

### <Example 1>

### <Preparation of raw material solutions>

A raw material solution A was prepared by mixing 68.6 g of ion-exchanged water with 17.2 g of 28 mass-percent ammonia water and 20.7 g of heptanoic acid.

A raw material solution B was prepared by diluting 23.8 g of 80 mass-percent water-containing hydrazine with 55.3 g of ion-exchanged water.

As a raw material solution C, a solution was prepared by dissolving 79.8 g of silver nitrate crystal in 68.6 g of ion-exchanged water heated to 60°C.

### <Reaction synthesizing Ag nanoparticles >

A 5 L reaction vessel was charged with 534.5 g of ion-exchanged water, and the raw material solutions A, B, C are added to the ion-exchanged water in order to initiate the reaction under stirring at a constant speed of 200 rpm. When the nd ^{(2/3)} was calculated for this reaction, it was 40.

The temperature was maintained at 65°C during reaction. The reaction was terminated 60 minutes after the initiation of the reaction. Afterwards, the reaction mixture was left still for 24 hours to concentrate the reaction product.

After leaving the reaction mixture still for 24 hours, the supernatant of the above reaction product was removed, and the resultant concentrated product was poured into a capped bottle and left still for over one month to be further concentrated. Then the supernatant was removed to give a concentrated reaction product. The silver concentration in the concentrated reaction product was 64.1 percent by mass.

### <Preparation of composition>

The 77.6 g of the obtained concentrated reaction product was separately placed in a beaker. The 19.6 g of the supernatant obtained in the precedent concentrating step was added to the concentrated reaction product. Subsequently, 8.1 g of the 6% aqueous solution of hydroxyethyl cellulose was added. Then the mixture of the obtained concentrated reaction, the supernatant, and the aqueous solution of hydroxyethyl cellulose was stirred and dispersed. Further, 3.5 g of aqueous latex resin and 1.7 g of vinyl chloride copolymer, part of constitutional unit of which was neutralized by amine, was added. Again the mixture added with the aqueous latex resin and the vinyl chloride copolymer was stirred and dispersed.

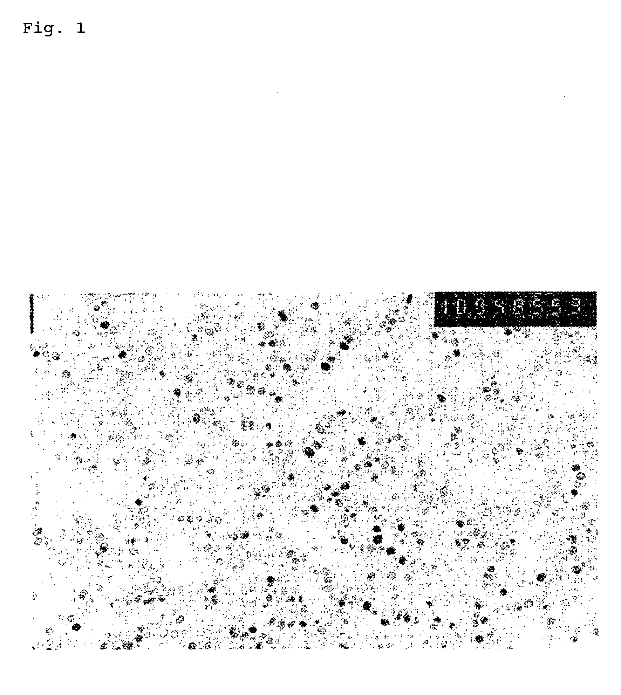

The amount of silver in the thus-obtained silver nanoparticle composition was 41.4 percent by mass. An electron microscope photograph of the particles in the composition is shown in Fig. 1. The average primary particle diameter computed based on the obtained TEM image was 9.2 nm, and the D₅₀ diameter showing the 50% cumulative average diameter was 9.3 nm. The median diameter of the secondary aggregate of the composition was 0.3µm.

The obtained composition was applied to a PET (polyethylene terephthalate) film (Melinex : (registered trademark) STXRF24, product of DuPont Teijin Films) using a flexoproof print tester (Manufacturer : RK Print Coat Instrument, Model:ESI 12, Anilox; 200 lines). The obtained coating film was subjected to heat treatment at 140°C for 30 seconds to form a sintered film. The surface resistivity measured was 1.9Ω/ 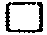 .

### <Examples 2, 3 and Comparative Example 1>

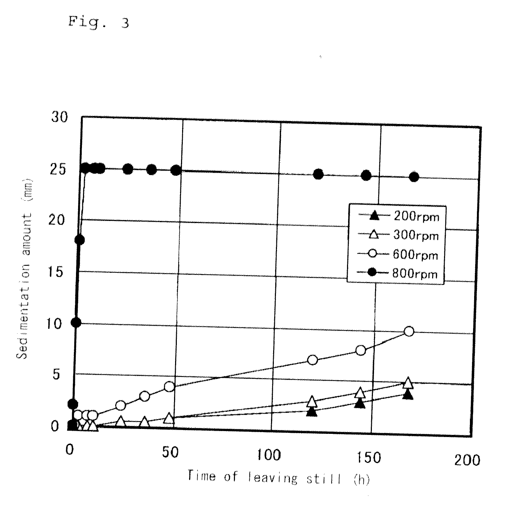

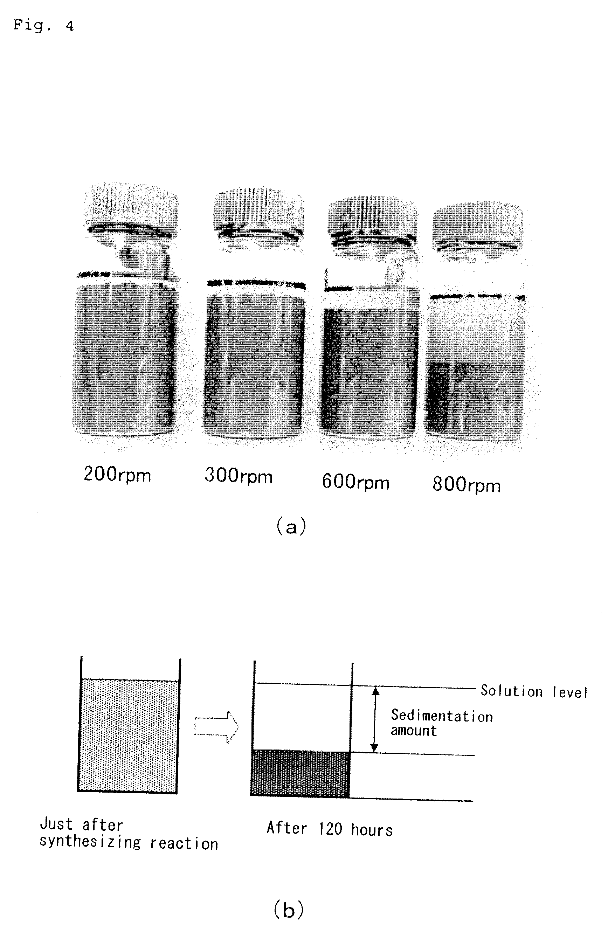

When the stirring speed during synthesizing Ag nanoparticles was varied in Example 1, the secondary aggregation diameter and the influence on the film obtained on coating and sintering were studied. The result is shown in Fig. 1. Also the results related to the sedimentation speed of the composition when the composition produced with each number of stirring rotation was left still are shown in Fig. 3 and Fig. 4. Fig. 3 shows the time of leaving still and the distance from the solution level to the sediment of the particles settling out when left still (sedimentation amount, mm). Fig. 4 (a) is the photograph showing how the composition settled out 120 hours after leaving still , and Fig. 4 (b) is a pattern diagram simply showing how to calculate the sedimentation amount. The sedimentation amount is the distance from the solution level to the upper face of the sediment 120 hours after leaving still.

**[Table 1]**

| | Number of rotation | Ag concentration of composition | nd^{(2/3)} | Secondary aggregate diameter | Surface resistivity | Adhesion |
|---|---|---|---|---|---|---|
| | (rpm) | (%) | | Median dia. (*µ*m) | (Ω/ 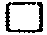 ) | |
| Example 1 | 200 | 41.4 | 40 | 0.3 | 1.9 | Good |
| Examples 2 | 300 | 41.0 | 60 | 0.3 | 0.8 | Good |
| Example 3 | 600 | 40.2 | 120 | 1.4 | 2.8 | Good |
| Comparative example 1 | 800 | 41.6 | 161 | 2.2 | Cannot measure | Good |

The influence of the stirring speed when synthesizing Ag nanoparticles can be found by comparing Examples 1 to 3 and Comparative Example 1. The Ag nanoparticle composition produced with the stirring speed of 800 rpm (nd ^{(2/3)} =161) settles out much easier than the Ag nanoparticle composition produced with the lower speed. It has been also found out that the film applied with the composition and sintered shows no electrical conductivity.

The result suggests that the secondary aggregate diameter of the Ag nanoparticle composition produced under the condition with high stirring speed or large nd ^{(2/3)} value is so large that the composition easily settles out, and the formed film is porous which causes extremely high resistance value.

Evaluations of adhesion in Examples 1 to 3 and Comparative Example 1 were conducted by the tape peeling test. No peeling-off of the metal film from the base film was observed in all the specimens, which proved good adhesion.

### <Examples 4 to 8, Comparative Example 2>

The nitric acid concentration and electrical conductivity of the composition produced in Example 1 were measured. The nitric acid concentration was measured by reduction distillation-neutralization titration. The electrical conductivity was measured by a conductance meter (made by HORIBA, Ltd.) The nitric acid concentration was 2.7 mass-percent and the electrical conductivity was 10.5 s/m.

The Ag nanoparticle composition was diluted with the supernatant obtained in the concentrating step when preparing the Ag nanoparticle composition in Example 1. Purified water was used with the supernatant at the ratio of 1:1 (in volume) for dilution to produce the composition in Example 4. The composition in Example 5 was produced by conducting the dilution with only purified water without adding the supernatant. Further, obtained concentrated product was once diluted with purified water only, and afterwards, precipitated. Furthermore, the supernatant was removed to obtain the concentrated product.

The composition in Example 6 was produced by diluting the resultant concentrated product with purified water. The composition in Comparative Example 2 was produced by diluting the concentrated product with purified water, wherein the concentrated product was obtained with more number of cycles of dilution with purified water and concentration than the number of the cycles for producing the concentrated product in Example 6.

The compositions in Examples 7 and 8 were produced by adding nitric acid to the Example 1.

The nitric acid concentration and electrical conductivity of these compositions are shown in Table 2. Also, the secondary aggregate diameter of the composition, and the surface resistivity when the coating film obtained by applying the compositions with a flexoproof print tester was heat-treated in a dryer for 100°C for 30 seconds to form a sintered film.

**[Table 2]**

| | Ag concentration of composition | Nitric acid concentration | Electrical conductivity | Secondary aggregate diameter | Surface resistivity | Adhesion |
|---|---|---|---|---|---|---|
| | (%) | (%) | (S/m) | Median dia. (*µ*m) | (Ω/ 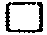 ) | |
| Example 1 | 41.4 | 2.7 | 10.5 | 0.3 | 2.1 | Good |
| Example 4 | 41.6 | 21 | 7.6 | 0.3 | 1.5 | Good |
| Examples 5 | 41.3 | 1.4 | 4.9 | 0.3 | 3.5 | Good |
| Example 6 | 41.6 | 0.6 | 3.5 | 0.9 | 29.2 | Good |
| Example 7 | 42.4 | 3.9 | 19.7 | 0.3 | 1.7 | Good |
| Example 8 | 42.1 | 5.3 | 20 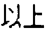 | 0.4 | 2.0 | Good |
| Comparative example 2 | 41.2 | 0.1 | 0.9 | 2.2 | Cannot measure | Good |

Comparison of Examples 1 and 4 to 8 with Comparative Example 2 shows the nitric acid concentration and the electrical conductivity greatly affects the dispersion properties and the application of the composition, and the sintered film.

When the nitric acid concentration was 0.1 mass-percent and the electrical conductivity of the composition was 0.9 S/m, the secondary aggregate diameter was 2.2 µm, and the composition after being produced was heavily precipitated. Also the sintered film was porous. Therefore the surface resistivity could not be measured with no electrical conductivity.

Evaluations of adhesion in Examples 1, 4 to 8 and Comparative Example 2 were conducted by the tape peeling test. No peeling-off of the metal film from the base film was observed in all the specimens, which proved good adhesion.

### <Comparison Example 3>

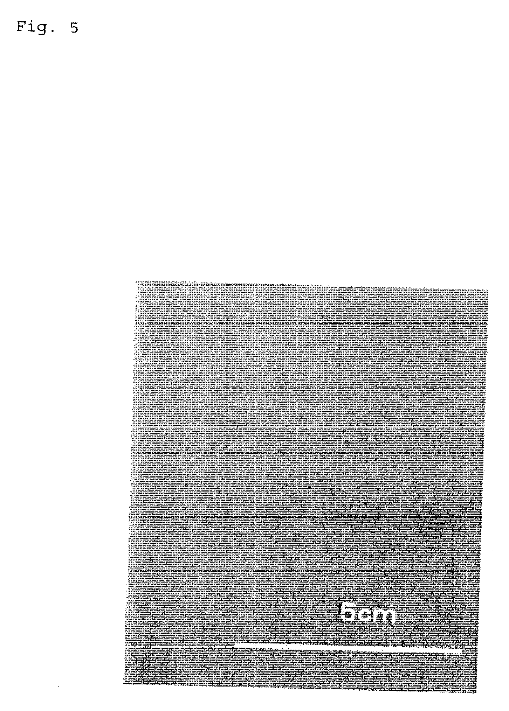

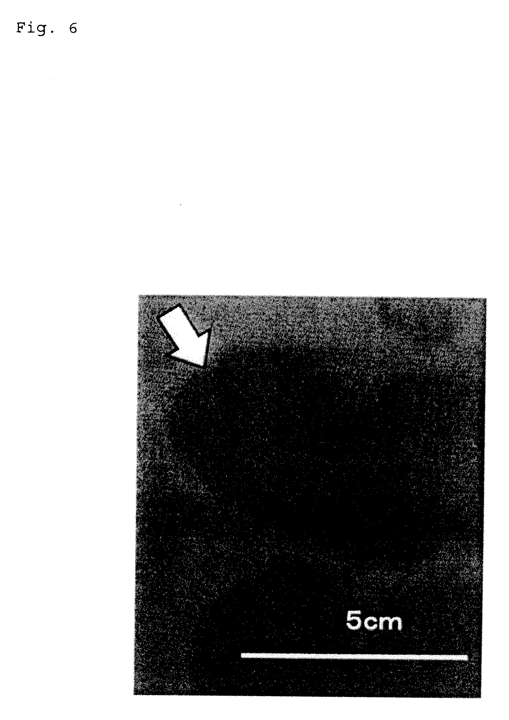

The sintered film was formed in the same manner as Example 1 except the addition of vinyl chloride copolymer, part of constitutional unit of which was neutralized by amine. The photographs of the sintered films obtained in Example 1 and Comparative Example 3 are shown in Fig. 5 and Fig. 6 respectively. In Fig. 6, sintering unevenness (black portions in the photograph : a portion indicated by an arrow) is found in places. Since the resistance value of the black portions in the photograph is higher than those of other portions, the sintering unevenness seems to be caused by lack of sintering.

In comparison of Example 1 with Comparative Example 3 (comparison of Fig. 5 and Fig. 6), it was proved that uniform sintering was promoted in the case with no addition of the vinyl chloride copolymer comparing to the case with the vinyl chloride copolymer being added. Also, evaluations of adhesion in Example 1, and Comparative Example 3 were conducted by the tape peeling test. No peeling-off of the metal film from the base film was observed in all the specimens, which proved good adhesion.

### [INDUSTRIAL APPLICABILITY]

The a metal nanoparticle composition according to the present invention is preferably applicable to printed electronics and may be used for articles under study such as printed CPUs, printed lighting devices, printed RFID tags, all-printed displays, sensors, printed wiring boards, organic solar cells, electronic books, nano-imprinted LEDs, liquid crystal-PDP panels, and printed memories.

## Claims

1. A composition of a metal nanoparticles wherein a secondary aggregation diameter (median diameter) is 2.0 µm or less as determined by disk centrifugal-type particle size distribution measurement.

2. A composition of a metal nanoparticle according to claim 1, wherein a primary particle diameter is 30 nm or less as measured using a transmission electron microscope.

3. A composition of a metal nanoparticle according to claim 1 or 2, wherein an organic carboxylic acid having a carbon number of 3 to 8 or a derivative thereof is present around a primary particle.

4. A composition of a metal nanoparticle according to any of claims 1 to 3, wherein a metal species of the metal nanoparticle is silver.

5. A composition of a metal nanoparticle in which the particle according to any of claims 1 to 4 is dispersed and which is composed mainly of water.

6. A composition of a metal nanoparticle according to any of claims 1 to 5, wherein an electrical conductivity of the composition is not less than 1 S/m.

7. A composition of a metal nanoparticle according to any of claims 1 to 6, containing 0.2 mass-percent or more of nitric acid component.

8. A composition of a metal nanoparticle according to any of claims 1 to 7, containing an aqueous resin dispersion.

9. A composition of a metal nanoparticles according to any of claims 1 to 8, containing a water soluble resin.

10. A composition of a metal nanoparticle according to any of claims 1 to 9, containing a resin having an amine as a constitutional unit.

11. A method for manufacturing a composition of a metal nanoparticle according to any of claims 1 to 10, **characterized in that** synthesization of the metal nanoparticle is performed while stirring under a condition with nd(2/3) being not more than 160 in a step for synthesizing the metal nanoparticle, where n (rpm) is the number of rotation of a stirrer and d (m) is a diameter of a stirring blade.

12. A metal thin film formed by coating a composition of a metal nanoparticle according to any of claims 1 to 10, and then firing the coated dispersion in air at 140 °C or lower for less than 90 seconds.

13. A metal wiring pattern, formed by forming a thin line by a composition of a metal nanoparticle according to any of claims to 10, and then firing the thin line in air at 140 °C or lower for less than 90 seconds for metallization.

14. An antenna for RFID, formed by forming a thin line by a composition of a metal nanoparticle according to any of claims 1 to 10, then firing the thin line in air at 140 °C or lower for less than 90 seconds for metallization to form a metal thin line, and forming an antenna portion for RFID using the metal thin line.

15. An RFID inlet using an antenna according to claim 14.
